# EUROPEAN PATENT APPLICATION

(11) **EP 1 515 325 A2**
(43) Date of publication of application: **16.03.2005**
(21) Application number: 04021369.6
(22) Date of filing: 08.09.2004
(51) Int. Cl.: G11B 7/26

(54) **Method for manufacturing a multilayer recording type optical recording medium and an intermediate in the manufacturing process of the same**

(30) Priority: 10.09.2003 JP 2003318725
(71) Applicant: TDK Corporation, Tokyo 103-8272 (JP)
(72) Inventor: Komaki, Tsuyoshi c/o TDK Corporation, Tokyo 103-8272 (JP)
(74) Representative: Wagner, Karl H., Dipl.-Ing.

(57) **Abstract**

A method for manufacturing a multilayer recording type optical recording medium and an intermediate in a manufacturing process of the optical recording medium are provided, which can form a spacer layer and a light transmitting layer with a uniform thickness and can provide good production efficiency. In this manufacturing method, a circular projection having an outer diameter smaller than an inner diameter of a central hole is formed near the center of the spacer layer. The light transmitting layer is spread on the spacer layer by supplying a radiation curable resin to a region around the circular projection and rotating the substrate. The light transmitting layer is irradiated with radiation to be cured. Then, the central hole is formed, thereby removing the circular projection.

## Description

The present invention relates to a method for manufacturing a multilayer recording type optical recording medium having a central hole, in which a spacer layer and a light transmitting layer are formed on a substrate in that order, and an intermediate in a manufacturing process of the optical recording medium.

In recent years, optical recording media such as CDs (Compact Disc), DVDs (Digital Versatile Disc), and the like, have spread rapidly. Typical optical media have an outer diameter of 120 mm and a thickness of 1.2 mm that are standardized. For a DVD, laser light having a shorter wavelength than that for a CD is used as illumination light and numerical aperture of a lens for the illumination light is made larger than that for a CD. Thus, s DVD enables the larger amount of information to be recorded and reproduced with higher density, as compared with CDs.

On the other hand, there is a tendency that precision of recording or reproducing the information is degraded as the wavelength of the illumination light becomes shorter and the numerical aperture of the lens becomes larger. This is because coma aberration is generated because of a tilt (warp) of the disc. In order to overcome the above problem, a DVD employs a light transmitting layer having a thickness of 0.6 mm, which is a half of that in a CD, so as to ensure margin for the tilt (warp) of the disc, thereby maintaining the precision of the recording and reproducing information.

However, the light transmitting layer having a thickness of 0.6 mm cannot provide sufficient stiffness and strength by itself to DVD. Thus, a DVD is formed by bonding two substrates having a thickness of 0.6 mm to each other with their information recording surfaces arranged inside so as to have a total thickness of 1.2 mm that is the same as CD. In this manner, in a DVD, the stiffness and strength that are substantially equal to those of a CD are ensured. In DVDs, a spacer layer can be formed between substrates, and information can be recorded on both sides of the spacer layer while the substrates are bonded to each other. By employing such a double-sided recording type structure, it is possible to record the larger amount of information with higher density on a DVD.

Moreover, an optical recording medium typically has a central hole (ϕ = 15 mm in CDs and DVDs, for example). The central hole is formed simultaneously with a molding process in which a substrate is molded to be a circular disk, and is used not only for positioning the optical recording medium in a recording and reproducing apparatus but also for transfer, storage and the like, of the optical recording medium in a manufacturing process.

In order to achieve recording of the larger amount of information with higher recording density, an optical recording medium has now drawn attention, for which the wavelength of the illumination light is made further shorter and the numerical aperture of the lens is further increased. In this optical recording medium, a further thinner light transmitting layer is formed in accordance with the shorter wavelength of the illumination light and the increased numerical aperture (see Japanese Patent Laid-Open Publication No. 2003-85836, for example). Especially, in order to standardize the specification, an optical recording medium has spread, for which blue-violet laser light having a wavelength of 405 nm is used as illumination light and the numerical aperture is set to 0.85, and which includes a light transmitting layer having a thickness of 0.1 mm in accordance with these conditions. In this optical recording medium, a multilayer recording type structure can be achieved by forming the spacer layer on one surface or both surfaces of the substrate and forming recording layers on both sides of the spacer layer, as in DVD.

In the case in which the medium is of a single-sided two-layer recording type, it has been proposed that the thickness of the substrate, that of the spacer layer, that of the light transmitting layer be set to approximately 1.1 mm, approximately 25 µm, and approximately 75 µm, respectively. In order to keep precision of recording and reproducing information good, it is demanded that variation in the thickness of the multilayer structure, i.e., the spacer layer and the light transmitting layer be within ± 2 µm. That is, it is demanded that the difference between the minimum thickness and the maximum thickness of the multilayer structure be 4 µm or less.

As a method for forming such a thin light transmitting layer that is as thin as 75 µm, the following methods are considered. One method is to bond a film of polycarbonate or the like to a substrate. Another method is to spread a resin that can be cured by radiation such as UV (ultraviolet) rays or electron beams, on a substrate by spin-coating and then cure that resin by irradiating radiation. The latter method is preferable for forming a light transmitting layer because that method is good in production efficiency, can be performed at a lower cost, can provide a good tracking performance, and the like.

However, when the spin-coating method is adopted to a substrate having a central hole formed therein, the thickness of the light transmitting layer is liable to become uneven. Thus, the recording and reproducing of the information with high density may be difficult to perform.

The reason why the thickness of the light transmitting layer becomes uneven is not clear. However, that reason is generally speculated as follows. When a resin was supplied to a region surrounding the central hole, centrifugal force acts on the resin immediately because of rotation of the substrate. Thus, the resin flows from the supplied position outward in a radial direction so as to spread over the substrate. In this manner, the resin forms the light transmitting layer and excess amount of the resin further flows outward in the radial direction. While the resin flows outward in the radial direction, centrifugal force continues to act on the resin. Therefore, the excess amount of resin is run out in an inner region in the radial direction, which is near the supplied position, relatively rapidly. On the other hand, in an outer region of the substrate, the excess amount of resin is supplied from an inner region. Thus, it takes a longer time to run out the excess amount of resin in a region outer than in the region where the resin was supplied. Therefore, the thickness of the resultant layer does not become uniform. That is, the resultant layer is thinner in the inner region than in the outer region. In order to prevent the resultant layer in the inner region from becoming thinner, it is considered that the resin is additionally supplied to the inner region. However, in this case, control has to be done with high precision in accordance with variation in the thickness of the resultant layer. It is practically impossible to perform such control.

Moreover, when a resin was supplied to a region around the central hole, a part of the resin may enter the central hole so as to generate radial streaks and the like, in the light transmitting layer, for example, thus degrading the appearance of the light transmitting layer.

On the other hand, a method is known in which a substrate is molded in a shape having an annular projection around a central hole and the annular projection restricts flow of resin so as to prevent reduction in the thickness of the resultant layer in an inner region of the substrate (see Japanese Patent Laid-Open Publication No. 2001-167472, for example).

However, in the case in which the annular projection is formed to surround the central hole of the substrate, variation in the thickness of the spacer layer increases when the spacer layer is formed on the substrate. Thus, it is difficult to suppress variation in the thickness of two layers, i.e., the spacer layer and the light transmitting layer within an acceptable range.

If the substrate is molded in the form of a disk having no central hole and thereafter a resin is supplied to the center of the substrate or to a portion inner than the portion where the resin is supplied in the case in which the substrate has the central hole, the resin can be spread with a uniform thickness. In this case, after the spread resin was cured, the central hole can be formed by punching out a hole in the light transmitting layer and the substrate with a tool.

However, the substrate having no central hole has a problem that such a substrate is difficult to transfer, store and the like, in a manufacturing process of the optical recording medium and decreases production efficiency. Moreover, it is difficult to position the substrate having no central hole with high precision. In addition, the amount of eccentricity of the central hole tends to become larger when the central hole is formed in a later process.

In view of the foregoing problems, various exemplary embodiments of this invention provide a method for manufacturing a multilayer recording type optical recording medium and an intermediate in a manufacturing process of the optical recording medium, which can form a spacer layer and a light transmitting layer with a uniform thickness and can provide good production efficiency.

According to one exemplary embodiment of this invention, a circular projection having an outer diameter smaller than an inner diameter of a central hole is formed integrally with a spacer layer in the vicinity of a center of the spacer layer. Then, a radiation curable resin is supplied to a region around the circular projection and at the same time a substrate is rotated, thereby a light transmitting layer is spread over the spacer layer. In this manner, the aforementioned object can be achieved.

In summary, the above-described objectives are achieved by the following aspects of the present invention.
(1) A method for manufacturing a multilayer recording type optical recording medium in which a spacer layer and a light transmitting layer are formed on at least one surface of a substrate in that order, the optical recording medium having a central hole, the method comprising the steps of: forming the spacer layer on the substrate and forming a circular projection integrally with the spacer layer near a center of the spacer layer, the circular projection having an outer diameter smaller than an inner diameter of the central hole; supplying a radiation curable resin, which is fluid and is able to transmit light, to a region near the circular projection and rotating the substrate, thereby causing the radiation curable resin to flow outward in a radial direction by centrifugal force to spread a light transmitting layer on the spacer layer; curing the spread light transmitting layer by irradiation radiation; and forming the central hole to remove the circular projection.
(2) The method for manufacturing a multilayer recording type optical recording medium according to (1), wherein the substrate is molded to have a manufacturing hole having a smaller inner diameter than that of the central hole near a center of the substrate, and in the step of forming the spacer layer the circular projection is formed to be annular along a circumference of the manufacturing hole.
(3). The method for manufacturing a multilayer recording type optical recording medium according to (1) or (2), wherein in the step of forming the spacer layer the circular projection is formed to have the outer diameter equal to, or smaller than, 10 mm.
(4) The method for manufacturing a multilayer recording type optical recording medium according to (1) or (2), wherein in the step of forming the spacer layer the circular projection is formed to have the outer diameter equal to, or smaller than, 8 mm.
(5) The method for manufacturing a multilayer recording type optical recording medium according to any one of (1) to (4), wherein in the step of forming the spacer layer the circular projection is formed to have the outer diameter equal to, or larger than, 3 mm.
(6) An intermediate manufactured in a manufacturing process of a multilayer recording type optical recording'medium having a central hole, the optical recording medium including a spacer layer formed on at least one surface of a substrate, the intermediate comprising a circular projection having a smaller outer diameter than an inner diameter of the central hole, formed near a center of the spacer layer.
(7) The intermediate according to (6), further comprising a manufacturing hole having an inner diameter smaller than that of the central hole, wherein the circular projection is formed to be annular.
(8) The intermediate according to (6) or (7), wherein the circular projection has the outer diameter equal to, or smaller than, 10 mm.
(9) The intermediate according to (6) or (7), wherein the circular projection has the outer diameter equal to, or smaller than, 8 mm.
(10) The intermediate according to (6) or (7), wherein the circular projection has the outer diameter equal to, or larger than, 3 mm.

Please note that the term "radiation" is generally used to mean an electromagnetic wave and a particle beam that are radiated by decay of radioactive element, such as γ-ray, X-ray, α-ray or the like. However, the term "radiation" herein is used as a general term of an electromagnetic wave and a particle beam that have a nature for curing a specific resin that is fluid, such as UV rays, and electron beams.

According to one exemplary embodiment of this invention, the circular projection is formed together with the spacer layer in a process for forming the spacer layer. Thus, the circular projection does not obstruct the formation of the spacer layer having a uniform thickness. Therefore, the spacer layer having the uniform thickness can be formed. Moreover, the radiation curable resin that is a material for the light transmitting layer is supplied to the region near the circular projection having the outer diameter smaller than the central hole. Thus, centrifugal force acting on the resin in the region where the resin is supplied is small. In addition, since the resin is hard to move away from the circular projection because of its viscosity, it is possible to prevent the resin in a region near the center of the substrate from becoming drastically thinner. Therefore, the light transmitting layer can be spread with a uniform thickness. Even if flash or the like is generated in the region around the circular projection, such flash can be removed by forming the central hole having the inner diameter larger than the circular projection. Thus, it is possible to surely form the light transmitting layer with a uniform thickness even in a region around the central hole. Furthermore, formation of a manufacturing hole in the substrate makes transfer and storage of the substrate in a manufacturing process of an optical recording medium easier, thus raising the production efficiency. In addition, since the substrate can be positioned by using the manufacturing hole as reference, the central hole having a small amount of eccentricity can be formed.

Various exemplary embodiments of the present invention will be described in detail with reference to the accompanying drawings, wherein:
Fig. 1 is a side cross-sectional view schematically showing the configuration of an optical recording medium manufactured according to an embodiment of the present invention;
Fig. 2 is a flowchart generally showing a manufacturing process of the optical recording medium;
Fig. 3 is a side cross-sectional view schematically showing the configuration of a substrate in the manufacturing process of the optical recording medium;
Fig. 4 is a side cross-sectional view schematically showing a state in which a core member is inserted into a manufacturing hole in the substrate;
Fig. 5 is a side cross-sectional view schematically showing a state in which the core member is brought into close contact with the manufacturing hole in the substrate;
Fig. 6 is a side cross-sectional view schematically showing formation of a spacer layer on the substrate;
Fig. 7 is a side cross-sectional view schematically showing a state in which the spacer layer is formed to have a predetermined thickness;
Fig. 8 is a side cross-sectional view schematically showing a curing process of the spacer layer;
Fig. 9 is a side cross-sectional view schematically showing the configuration of an intermediate obtained in the manufacturing process of the optical recording medium;
Fig. 10 is a side cross-sectional view schematically showing a step of spreading a light transmitting layer on the intermediate;
Fig. 11 is a side cross-sectional view schematically showing a state in which the light transmitting layer is spread to have a predetermined thickness;
Fig. 12 is a side cross-sectional view schematically showing a curing process of the light transmitting layer; and
Fig. 13 is a side cross-sectional view schematically showing a process for forming a central hole.

Various exemplary embodiments of this invention will be hereinafter described in detail with reference to the drawings.

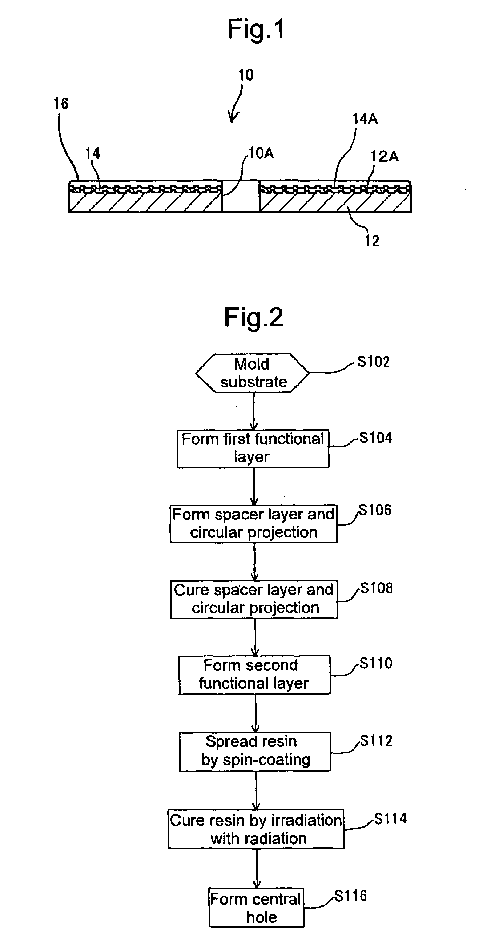

The present exemplary embodiment has a feature in a method for manufacturing an optical recording medium 10 as shown in Fig. 1, and in a structure of an intermediate in a manufacturing process of the optical recording medium 10. However, in order to help the reader understand the present exemplary embodiment, the structure of the optical recording medium 10 will be briefly described.

The optical recording medium 10 is a disk having an outer diameter of approximately 120 mm and a thickness of approximately 1.2 mm, and has a central hole 10A having an inner diameter of approximately 15 mm. The optical recording medium 10 is a single-sided two-layer recording type in which a spacer layer 14 and a light transmitting layer 16 are formed on one surface of a substrate 12 in that order.

The substrate 12 is formed of a resin such as polycarbonate, acrylic resin, epoxy resin, and has a thickness of approximately 1.1 mm. In the information recording surface 12A of the substrate 12 are formed fine concave and convex portions (not shown) for carrying information, such as pits and grooves. Please note that, although the terms "pits" and "grooves" are generally used to mean concave portions for carrying information, those terms are used herein to mean not only the concave portions but also convex portions for carrying information for convenience.

On the first information recording surface 12A of the substrate 12, a first functional layer is formed. However, since the first functional layer is thinner than the spacer layer 14 and the light transmitting layer 16 and appears to be needless to understand the present invention, the first functional layer is not shown in the drawings. For example, in the case where the optical recording medium 10 is a ROM (Read Only Memory) type disc, a reflection layer of Al, Ag, Au or the like is formed as the functional layer on the information recording surface 12A. In the case of an RW (Re-Writable) type disc, a recording layer made of a phase change material, a magneto-optical material or the like, is formed in addition to the reflection layer. In the case of an R (Recordable) type disc, a recording layer made of phase change material or including organic dye is formed in addition to the reflection layer.

The spacer layer 14 is formed on the first information recording surface 12A with the first functional layer interposed therebetween and has a thickness of approximately 25 µm. The spacer layer 14 is formed of a material that can be cured by radiation and can transmit light, such as an acrylic UV (ultraviolet) curable resin and an epoxy UV curable resin.

An opposite surface of the spacer layer 14 to the substrate 12 serves as a second information recording surface 14A where fine concave and convex portions for carrying information, such as pits and grooves, are formed. On the second information recording surface 14A, a second functional layer (not shown) is formed like the first functional layer on the first information recording surface 12A.

The light transmitting layer 16 is formed on the second information recording surface 14A with the second functional layer interposed therebetween and has a thickness of approximately 75 µm. The light transmitting layer 16 is also formed of a material that can be cured by radiation and can transmit light, such as an acrylic UV curable resin, like the spacer layer 14.

Next, a manufacturing method of the optical recording medium 10 will be described with reference to a flowchart shown in Fig. 2 and other drawings.

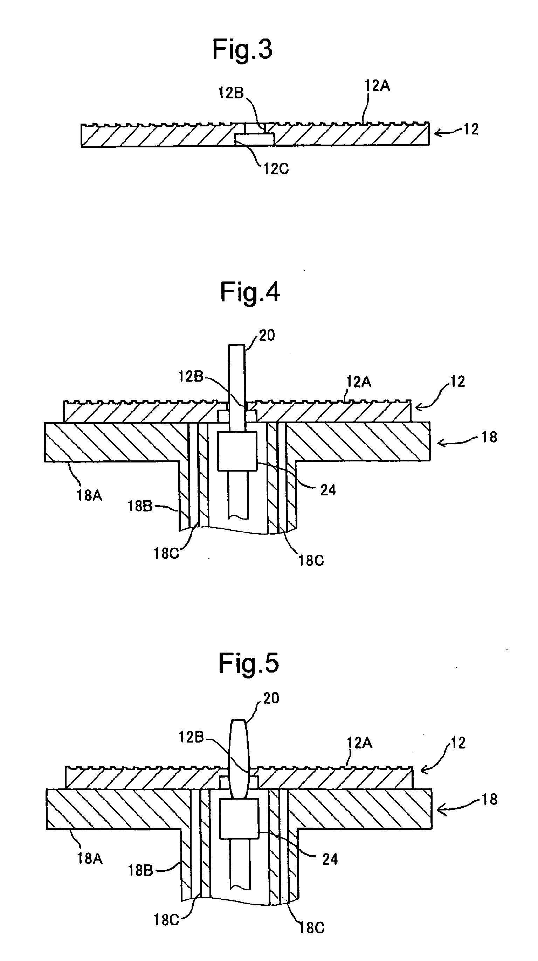

First, a substrate 12 in the form of a circular disc having an outer diameter of approximately 120 mm and a thickness of approximately 1.1 mm, shown in Fig. 3, is molded by injection molding (Step S102). In the injection molding process, fine concave and convex portions for carrying information, such as pits and grooves, are transferred onto the first surface of the substrate 12, thereby forming the information recording surface 12A. In the injection molding process, a circular concave portion 12C having the same inner diameter as that of the central hole 10A is also formed on an opposite surface to the first information recording surface 12A. Moreover, in the injection molding process, a manufacturing hole 12B having an inner diameter smaller than the central hole 10A is simultaneously formed. The manufacturing hole 12B may be formed in the injection-molded substrate 12 by means of a tool or the like.

The thus obtained a plurality of substrates 12 are usually stored or transferred while being stacked. For example, by inserting a guide in the form of a round bar or the like, into the manufacturing hole 12B, it is easy to stack a plurality of substrates 12 while they are aligned. This makes the storage or transfer of the substrates easier, thus improving production efficiency.

On the information recording surface 12A of the substrate 12, a functional layer (not shown) is formed by sputtering, deposition, or the like (Step S104).

Then, as shown in Fig. 4, while a core member 20 is inserted into the manufacturing hole 12B, the substrate 12 is horizontally placed on a rotating table 18 with the information recording surface 12A faced upward.

The rotating table 18 has a structure in which a shaft 18B projects downward from a table part 18A in the form of a circular disk placed horizontally. Within the shaft 18B, a vent hole 18C is formed to be in communication with the table part 18A. The shaft 18B is engaged with a rotating driving mechanism that is not shown. Moreover, to the vent hole 18C, a negative-pressure supply that is not shown is connected.

The core member 20 is a round bar having an outer diameter slightly smaller than the inner diameter of the manufacturing hole 12B in its original state, and can be fitted into the manufacturing hole 12B freely. The core member 20 is formed of a silicone resin, a fluororesin, an acrylic resin, an olefin resin or a mixture thereof, and has elasticity. The core member 20 has a hollow structure (not shown) in which the inside thereof is in communication with air supply means 24 at its lower end. When an air is supplied to the inside of the core member 20, the core member 20 expands and increases its outer diameter, so that the core member 20 comes into close contact with the inner circumference of the manufacturing hole 12B.

First, as shown in Fig. 5, the core member 20 is made to expand by the air supply means 24, so that the core member 20 is brought into close contact with the inner circumference of the manufacturing hole 12B. Then, a negative pressure is supplied to an upper surface of a table part 18A of the rotating table 18 so as to absorb the substrate 12 and fix it onto the rotating table 18.

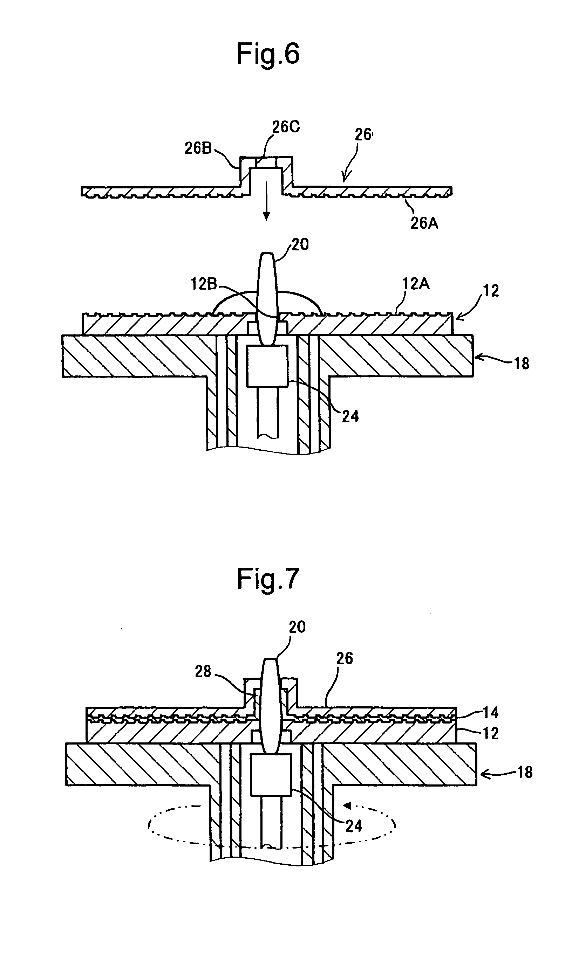

Then, as shown in Fig. 6, a predetermined amount of radiation curable resin that is fluid is supplied to a region near the center of the substrate 12. Moreover, a transparent stamper 26 is brought close to the first information recording surface of the substrate 12. Please note that the radiation curable resin does not enter a gap between the core member 20 and the substrate 12 because the core member 20 is in close contact with the manufacturing hole 12B.

The transparent stamper 26 is an approximately circular plate formed of a material that can transmit light, such as an acrylic resin, an olefin resin, or glass. One surface of the transparent stamper 26 serves as a transfer surface 26A having a fine convex and concave pattern that is reverse to the pattern in the second information recording surface 14A. The transparent stamper 26 has a cylindrical projection 26B near its center, which projects toward the opposite direction to the transfer surface 26A. That projection 26B has an inner diameter that is larger than the manufacturing hole 12B and is smaller than the central hole 10A, and the information recording surface 26A side of the projection 26B is opened with that inner diameter. On the other hand, although the opposite side of the projection 26B to the information recording surface 26A is also opened, it is partially closed. Near the center of that side of the projection 26B, a through hole 26C is formed. The through hole 26C has an inner diameter that allows the through hole 26C to fit with the core member 20 freely.

When the transparent stamper 26 was brought close to the first information recording surface 12A of the substrate 12 by pressing and reached a position away from the first information recording surface 12A by approximately 25 µm, a space between the transparent stamper 26 and the substrate 12 is filled with a radiation curable resin, thereby forming a spacer layer 14. Then, fine concave and convex portions are transferred onto an opposite surface of the spacer layer 14 to the substrate 12, so that the second information recording surface 14A is formed. Onto a surface of the spacer layer 14 that is close to the substrate 12, fine concave and convex portions are also transferred to copy the pattern in the first information recording surface 12A. In addition, near the center of the spacer layer 14, a circular projection 28 is formed integrally with the spacer layer 14 (Step S106). The circular projection 28 has an annular shape with an outer diameter smaller than the inner diameter of the central hole 10A.

In order to spread a light transmitting layer to have a uniform thickness in a spreading process of the light transmitting layer described later, it is preferable that the outer diameter of the circular projection 28 be set to 10 mm or less. When the outer diameter of the circular projection 28 is set to 8 mm or less, a margin is obtained. When that outer diameter is set to 5 mm or less, the uniformity of the thickness of the light transmitting layer can be further improved. On the other hand, considering the molding of the circular projection 28 or the like, it is preferable that the outer diameter of the circular projection 28 be set to 3 mm or more.

Moreover, in order to enhance an effect that the resin is attracted to the circumferential surface of the circular projection 28 so as to spread the light transmitting layer with a uniform thickness, it is preferable that the height of the circular projection 28 be set to 1 mm or more. When the height is set to 2 mm or more, the uniformity of the thickness of the light transmitting layer can be further improved. The effect that the light transmitting layer can be spread with a uniform thickness tends to be enhanced as the circular projection 28 becomes higher. However, when the height of the circular projection 28 is 5 mm or more, the above-described effect is not correspondingly increased by change in the height of the circular projection 28. Thus, considering the molding of the circular projection 28 and the like, the upper limit of the height of the circular projection 28 is preferably set to about 5 mm.

The rotating table 18 may be rotated after the transparent stamper 26 was brought close to the first information recording surface of the substrate 12, so that the radiation curable resin is caused to flow outward in a radial direction by centrifugal force. In this case, the transparent stamper 26 approaches to the first information recording surface 12A of the substrate 12 because of a negative pressure. Thus, the rotation of the rotating table 18 can be stopped when the transparent stamper 26 reached a position away from the first information recording surface 12A by approximately 25 µm. Furthermore, by using both the pressing and the rotation of the rotating table 18 together, the space between the transparent stamper 26 and the substrate 12 may be filled with the resin.

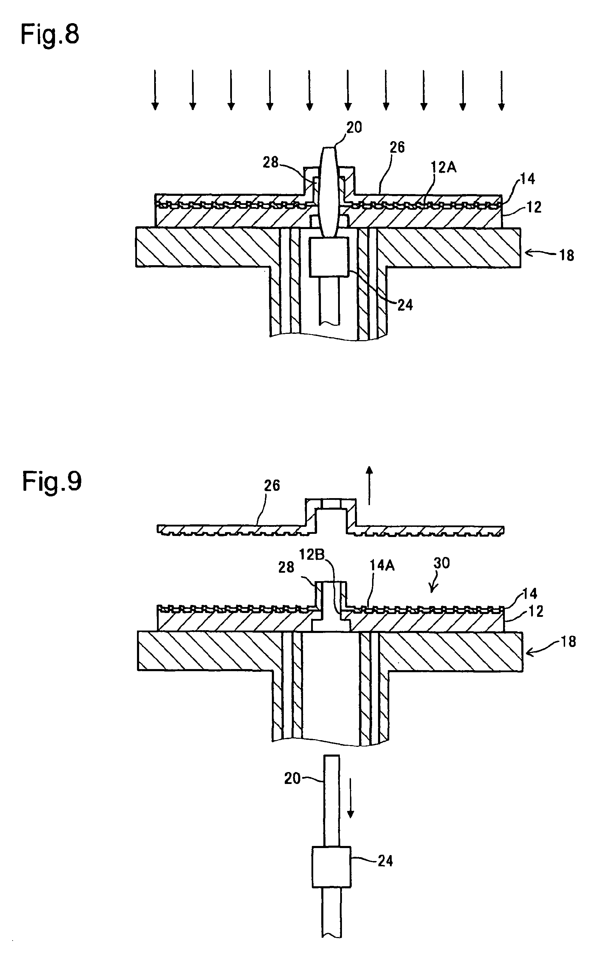

Next, as shown in Fig. 8, the rotation of the rotating table 18 is stopped, and the spacer layer 14 is uniformly irradiated with UV rays through the transparent stamper 26, so that the spacer layer 14 is cured (Step S108).

Then, the transparent stamper 26 is removed from the spacer layer 14. Also, the inside pressure of the core member 20 is reduced to bring back the core member 20 from the expanding state to the original state, so that the core member 20 is removed from the substrate 12. In this manner, as shown in Fig. 9, an intermediate 30 is obtained, in which the circular projection 28 having the outer diameter smaller than the inner diameter of the central hole 10A is formed near the center of the spacer layer 14 formed on the substrate 12.

Since the core member 20 is formed of a silicone resin, a fluororesin, or the like, it is hard to adhere to the spacer layer 14. Thus, the substrate 12 and the core member 20 can be separated from each other easily.

The intermediate 30 is dismounted from the rotating table 18. Then, the second functional layer (not shown) is formed on the second information recording surface 14A of the intermediate 30. This is achieved by sputtering, deposition or the like, as with the layer on the first information surface 12A (Step S110).

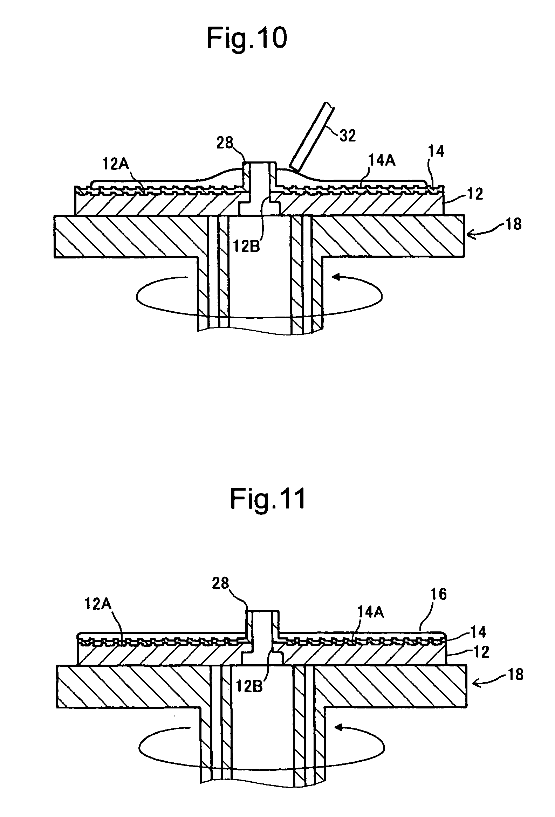

Next, the intermediate 30 is placed again on the rotating table 18. Then, as shown in Fig. 10, while the rotating table 18 is rotated, a nozzle 32 is brought close to a region near the circular projection 28. Then, a predetermined amount of a radiation curable resin being fluid is supplied onto the second information recording surface 14A. The thus supplied radiation curable resin is then spread outward in the radial direction by centrifugal force. During the spreading of the radiation curable resin, the amount of the flowing resin on the second information recording surface 14A is relieved and stabilized because the centrifugal force acting on the resin is smaller near the circular projection 28 (which has the outer diameter smaller than the central hole 10A) than near the outer circumference of the substrate 12. Moreover, the resin adhering to the circular projection 28 tries to stay in the vicinity of the circular projection 28 because of its viscosity. This also enhances the effect that the amount of the flowing resin on the second information recording surface 14A is relieved.

In this manner, a light transmitting layer 16 is spread over the second information recording surface 14A with a uniform thickness of approximately 75 µm, as shown in Fig. 11 (Step S112).

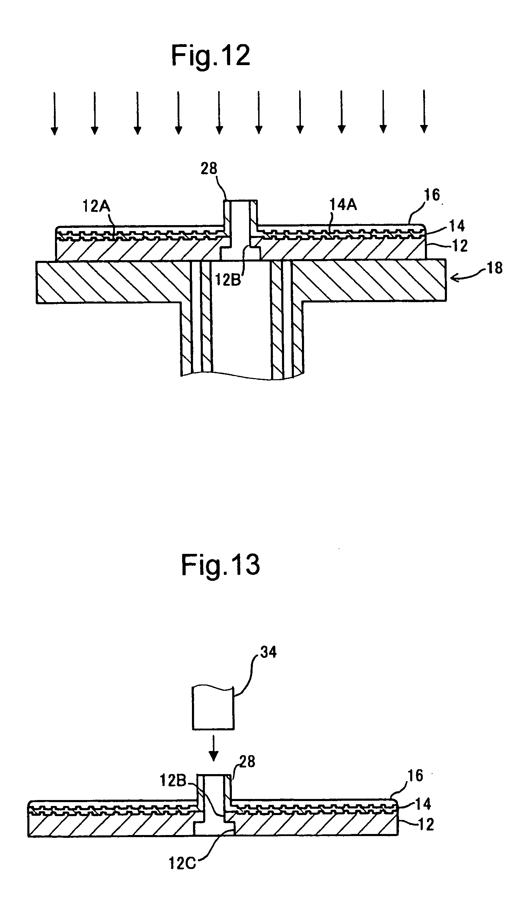

Then, as shown in Fig. 12, the rotation of the rotating table 18 is stopped, and the light transmitting layer 16 thus spread is uniformly irradiated with radiation such as UV rays, so that the light transmitting layer 16 is cured (Step S114).

Next, the substrate 12 is dismounted from the rotating table 18, a jig is fitted into the manufacturing hole 12B to position the substrate 12 (not shown). Then, as shown in Fig. 13, a circular tool 34 is placed on the substrate 12 concentrically with respect to the substrate 12. The circular tool 34 has an outer diameter equal to the size of the inner diameter of the central hole 10A Then, the circular tool 34 is penetrated into the substrate 12 in an axial direction thereof, thereby punching out a hole that serves as the central hole 10A in the substrate 12 (Step S116). Since the circular concave portion 12C having the inner diameter equal to that of the central hole 10A is formed in the substrate 12 in advance, the penetration can be easily done. Moreover, by using the manufacturing hole 12B, the amount of eccentricity of the central hole 10A can be suppressed to be small.

In this manner, the optical recording medium 10 is completed.

In the exemplary embodiment, the core member 20 is formed of a silicon resin, a fluororesin, or the like and a round bar that has elasticity and has an outer diameter slightly smaller than the inner diameter of the manufacturing hole 12B in its original state, and can be freely fitted into the manufacturing hole 12B. However, as long as the core member can come into close contact with the inner circumference of the manufacturing hole 12B, there is no restriction to the material and shape of the core member.

In the present exemplary embodiment, an acrylic UV curable resin and an epoxy UV curable resin are described as exemplary materials for the spacer layer 14 and the light transmitting layer 16. However, other resins that can transmit light and can be cured by radiation, such as electron-beam curable resin, may be used.

Moreover, in the exemplary embodiment, the substrate is formed by injection molding, which includes the circular concave portion 12C having the same inner diameter as that of the central hole (that has the inner diameter larger than that of the manufacturing hole 12B), in the opposite surface to the information recording surface 12A. However, the substrate 12 in which the opposite surface to the information recording surface 12A is flat may be formed by injection molding.

In the present exemplary embodiment, the manufacturing hole 12B is formed in the substrate 12 and the circular projection 28 is formed to be annular. However, the circular projection 28 may be formed to be cylindrical or in the form of a circular plate. Also in this case, the region in the vicinity of the circular projection 28 serves as a portion where the resin is reserved. Thus, it is possible to relieve and stabilize the amount of the flowing resin, thereby forming the light transmitting layer with a uniform thickness.

Although the optical recording medium 10 in the present exemplary embodiment is a two-layer recording type which has a single spacer layer and recording layers provided on both sides of the spacer layer. In case of a multilayer recording type optical recording medium having two or more spacer layers and three or more recording layers provided on both sides of the two or more spacer layers, similar effects can be achieved by applying the present invention to such an optical recording medium. In this case, the circular projection having the outer diameter smaller than the inner diameter of the central hole may be formed integrally with the uppermost spacer layer that is the closest one of a plurality of spacer layers to the light transmitting layer.

In the present exemplary embodiment, the optical recording medium 10 is a single-sided two-layer recording type in which information can be recorded onto one surface of the optical recording medium 10. However, it is apparent that the present invention can be applied to a double-sided multilayer recording type optical recording medium in which information can be recorded on both surfaces of the medium. In case of the double-sided two-layer recording type, for example, an optical recording medium having a total thickness of 1.2 mm can be obtained when a spacer layer having a thickness of 25 µm and a light transmitting layer having a thickness of 75 µm are formed on both surfaces of a substrate having a thickness of about 1.0 mm.

### (Example)

Ten intermediates 30 were manufactured for each of respective ten outer diameters of the circular projection 28, i.e., 2.2 mm, 4 mm, 5 mm, 6 mm, 7 mm, 8 mm, 9 mm, 10 mm, 12 mm, and 14 mm, in the manner described in the above embodiment. Then, a light transmitting layer 16 was spread on the second information recording surface 14A of each intermediate 30 under a spin-coating condition in which revolutions per minute of the turntable 18 is approximately 2000 rpm. In this manner, 100 optical recording media 10 were fabricated.

In this manufacturing, the following materials were used for the spacer layer 14.

| | |
|---|---|
| TMPTA (trimethylolpropane triacrylate) | 37 wt% |
| R-604 (manufactured by Nippon Kayaku Co., Ltd.) (neopentylglycol modified trimethylolpropane diacrylate) | 50 wt% |
| THF-A (tetrahydrofurfuryl acrylate) | 10 wt% |
| Irgacure® 184 (manufactured by Ciba Specialty Chemicals K. K.) (1-hydroxycyclohexynylphenylketone) | 3 wt% |

The following materials were used for the light transmitting layer 16.

| | |
|---|---|
| ART RESIN® UN-5200 (manufactured by Negami Chemical Industrial Co., Ltd.) | 77 wt% |
| ARONIX® M-315 (manufactured by Toagosei Co., Ltd.) | 10 wt% |
| THF-A (manufactured by Kyoeisha Chemical Co., Ltd.) | 10 wt% |
| Irgacure®184 | 3 wt% |

### Viscosity of the resin before curing: 6800 mPa·s

An average of the thickness of two layers, i.e., the spacer layer 14 and the light transmitting layer 16 in each optical recording medium 10 and a difference between the minimum thickness and the maximum thickness of those two layers in each optical recording medium 10 are shown in Table 1 for each outer diameter of the circular projection 28. The average and the difference shown in Table 1 are obtained as averaged values of thicknesses and thickness differences of ten optical recording media 10 having the circular projections 28 of the same outer diameter, respectively. For each outer diameter of the circular projections 28, the optical recording media 10 in which the light transmitting layers 16 looked good are shown with "○" in Table 1. The mark "○" represents that the appearance of the light transmitting layer 16 was good for all the ten optical recording media 10 having the circular projections 28 of the same outer diameter. A time required for spin-coating increased as the outer diameter of the circular projection 28 decreased, and is varied depending on the outer diameter of the circular projection 28. Therefore, for each outer diameter of the circular projection 28, the time required for spin-coating is also shown in Table 1.

**[Table 1]**

| Outer diameter of circular projection (mm) | Average of thickness of light transmitting layer + spacer layer (µm) | Difference of thickness of light transmitting layer + spacer layer (µm) | Time required for spin-coating (SEC) | Appearance of light transmitting layer |
|---|---|---|---|---|
| 2. 2 | 99. 9 | 0. 71 | 10. 5 | ○ |
| 4 | 99. 9 | 0. 71 | 10. 5 | ○ |
| 5 | 99. 9 | 0. 71 | 10. 5 | ○ |
| 6 | 100. 1 | 1. 82 | 10. 3 | ○ |
| 7 | 101. 0 | 1. 99 | 10. 3 | ○ |
| 8 | 99. 6 | 2. 55 | 10. 3 | ○ |
| 9 | 100. 7 | 3. 20 | 10. 0 | ○ |
| 10 | 100. 3 | 3. 84 | 10. 0 | ○ |
| 12 | 99. 8 | 4. 53 | 10. 0 | ○ |
| 14 | 100. 0 | 6. 61 | 9. 7 | ○ |

As shown in Table 1, in the case where the outer diameter of the circular projection 28 was 10 mm or less, it was confirmed that the difference of the thickness of the two layers including the spacer layer 14 and the light transmitting layer 16 was suppressed to 4 µm or less and the quality was good.

In the case where the outer diameter of the circular projection 28 was 8 mm or less, it was confirmed that the thickness difference was suppressed to 3 µm or less and the quality was better.

Moreover, all the 100 optical recording media 10 of this example had the light transmitting layers 16 that looked good, irrespective of the outer diameter of the circular projection 28.

### (Comparative Example)

As a comparative example, for each of eleven inner diameters of the manufacturing hole 12B, i.e., 0 mm (no manufacturing hole was formed), 2 mm, 4 mm, 5 mm, 6 mm, 7 mm, 8 mm, 9 mm, 10 mm, 12 mm, and 14 mm, ten intermediates were manufactured. Then, under the following spin-coating condition, a resin was supplied to a region near the manufacturing hole 12B on the second information recording surface 14A of each intermediate so as to spread the light transmitting layer 16. In this manner, 110 optical recording media 10 were manufactured. Other conditions were set to be the same as those in the above example.

For each inner diameter of the manufacturing hole 12B, an average of the thickness of two layers including the spacer layer 14 and the light transmitting layer 16 in each optical recording medium 10 and the difference of the thickness of those two layers are shown in Table 2. The average and the thickness difference listed in Table 2 are obtained as averaged values of thicknesses and thickness differences of ten optical recording media 10 having the manufacturing holes 12B of the same inner diameter, respectively. Moreover, in Table 2, for the respective inner diameters of the manufacturing hole 12B, the optical recording media 10 having the light transmitting layers 16 that looked good are shown with "○" while the optical recording media 10 having the light transmitting layers 16 that did not look good are shown with "×." The mark "○" represents that the appearance of the light transmitting layer 16 was good for all the ten optical recording media 10 having the manufacturing holes 12B of the same inner diameter, while the mark "×" represents that the appearance of the light transmitting layer 16 was not good for a part of or all of the ten optical recording media 10 having the manufacturing holes 12B of the same inner diameter.

**[Table 2]**

| Outer diameter of manufacturing hole (mm) | Average of thickness of light transmitting layer + spacer layer (µm) | Difference of thickness of light transmitting layer + spacer layer (µm) | Time required for spin-coating (SEC) | Appearance of light transmitting layer |
|---|---|---|---|---|
| 0 | 99. 4 | 0. 03 | 10. 5 | ○ |
| 2 | 99. 9 | 0. 71 | 10. 5 | × |
| 4 | 100. 1 | 1. 82 | 10. 3 | × |
| 5 | 100. 0 | 1. 99 | 10. 3 | × |
| 6 | 99. 6 | 2. 55 | 10. 3 | × |
| 7 | 100. 7 | 3. 20 | 10. 0 | × |
| 8 | 100. 3 | 3. 84 | 10. 0 | × |
| 9 | 100. 8 | 4. 53 | 10. 0 | × |
| 10 | 101.0 | 6. 61 | 9. 7 | ○ |
| 12 | 99. 7 | 8. 66 | 9. 5 | ○ |
| 14 | 99. 9 | 10. 99 | 9. 2 | ○ |

As shown in Table 2, in the case where the inner diameter of the manufacturing hole 12B was8 mm or less, the thickness difference of the two layers including the spacer layer 14 and the light transmitting layer 16 were suppressed to 4 µm or less. However, because the resin entered the manufacturing hole 12B, radial streaks or the like were generated in the light transmitting layer 16 and degraded the appearance of the light transmitting layer 16. That is, with respect to the appearance of the light transmitting layer 16, the required quality was not obtained. In the optical recording media 10 having no manufacturing hole, the appearance of the light transmitting layers 16 were good. However, precision of positioning the substrate when the central hole was formed was not high, as described above, and it was difficult to form the central hole with the small amount of eccentricity.

In the case where the inner diameter of the manufacturing hole 12B exceeded 8 mm, the thickness difference of the light transmitting layer 16 exceeded 4 µm. That is, with respect to this point, the required quality was not obtained. Although the appearance of the light transmitting layer 16 was not good in the case where the inner diameter of the manufacturing hole 12B was 9 mm, it was good in the case where the inner diameter of the manufacturing hole 12B was 10 mm or more.

The exemplary embodiments of the present invention can be used for forming a light transmitting layer with a uniform thickness in a multilayer recording type optical recoding medium.

## Claims

1. A method for manufacturing a multilayer recording type optical recording medium (10) in which a spacer layer (14) and a light transmitting layer (16) are formed on at least one surface of a substrate (12) in that order, the optical recording medium (10) having a central hole (10A), the method comprising the steps of:
forming the spacer layer (14) on the substrate (12) and forming a circular projection (26B) integrally with the spacer layer (14) near a center of the spacer layer (14), the circular projection (26B) having an outer diameter smaller than an inner diameter of the central hole (10A);
supplying a radiation curable resin, which is fluid and is able to transmit light, to a region near the circular projection (26B) and rotating the substrate (12), thereby causing the radiation curable resin to flow outward in a radial direction by centrifugal force to spread a light transmitting layer (16) on the spacer layer (14);
curing the spread light transmitting layer (16) by irradiation radiation; and
forming the central hole (10A) to remove the circular projection (26B).

2. The method for manufacturing a multilayer recording type optical recording medium (10) according to claim 1, wherein the substrate (12) is molded to have a manufacturing hole (12B) having a smaller inner diameter than that of the central hole (10A) near a center of the substrate (12), and in the step of forming the spacer layer (14) the circular projection (26B) is formed to be annular along a circumference of the manufacturing hole (12B).

3. The method for manufacturing a multilayer recording type optical recording medium (10) according to claim 1 or 2, wherein
in the step of forming the spacer layer (14) the circular projection (26B) is formed to have the outer diameter equal to, or smaller than, 10 mm.

4. The method for manufacturing a multilayer recording type optical recording medium (10) according to claim 1 or 2, wherein
in the step of forming the spacer layer (14) the circular projection (26B) is formed to have the outer diameter equal to, or smaller than, 8 mm.

5. The method for manufacturing a multilayer recording type optical recording medium (10) according to any one of claims 1 to 4, wherein
in the step of forming the spacer layer (14) the circular projection (26B) is formed to have the outer diameter equal to, or larger than, 3 mm.

6. An intermediate (30) manufactured in a manufacturing process of a multilayer recording type optical recording medium (10) having a central hole (10A), the optical recording medium (10) including a spacer layer (14) formed on at least one surface of a substrate(12),
the intermediate (30) comprising a circular projection (26B) having a smaller outer diameter than an inner diameter of the central hole (10A), formed near a center of the spacer layer (14).

7. The intermediate (30) according to claim 6, further comprising a manufacturing hole (12B) having an inner diameter smaller than that of the central hole (10A), wherein the circular projection (26B) is formed to be annular.

8. The intermediate (30) according to claim 6 or 7, wherein the circular projection (26B) has the outer diameter equal to, or smaller than, 10 mm.

9. The intermediate (30) according to claim 6 or 7, wherein the circular projection (26B) has the outer diameter equal to, or smaller than, 8 mm.

10. The intermediate (30) according to claim 6 or 7, wherein the circular projection (26B) has the outer diameter equal to, or larger than, 3 mm.
